# EUROPÄISCHE PATENTSCHRIFT

(11) **EP 3 388 580 B1**
(45) Veröffentlichungstag und Bekanntmachung des Hinweises auf die Patenterteilung: **19.08.2020**
(21) Anmeldenummer: 18152926.4
(22) Anmeldetag: 23.01.2018
(51) Int. Cl.: E01D 19/14

(54) **BAUWERK MIT EINEM SPANNGLIED UND EINER ENTEISUNGS- UND VEREISUNGSVORBEUGUNGSVORRICHTUNG FÜR DAS MANTELROHR DES SPANNGLIEDS**
BUILDING STRUCTURE WITH A TENDON AND A DE-ICING AND ICING PREVENTION DEVICE FOR THE JACKET TUBE OF THE TENDON
OUVRAGE DE CONSTRUCTION AVEC ORGANE DE TENSION ET DISPOSITIF DE DEGIVRAGE ET PRÉVENTION DE GIVRAGE POUR LA CHEMISE TUBULAIRE DE L'ORGANE DE TENSION

(30) Priorität: 11.04.2017 DE 102017206257
(43) Veröffentlichungstag der Anmeldung: 17.10.2018
(73) Patentinhaber: Dywidag-Systems International GmbH, 80796 München (DE)
(72) Erfinder: Brand, Werner, 85356 Freising (DE); Bauer, Michael, 85716 Unterschleißheim (DE); Kasper, Marcel, 80807 München (DE)
(74) Vertreter: Weickmann & Weickmann PartmbB

(56) Entgegenhaltungen:
- EP-A1- 1 061 204
- WO-A1-2007/114785
- DE-B3-102011 106 431
- DE-B3-102013 012 429
- KR-B1- 101 704 684
- US-B1- 6 518 497

## Beschreibung

Die Erfindung betrifft ein Bauwerk nach dem Oberbegriff des Anspruchs 1 (vgl. DE10 2011 106431 B3).

Das Vereisen der äußeren Oberfläche der Mantelrohre von Spanngliedern, die an Bauwerken verbaut sind, beispielsweise das Vereisen der äußeren Oberfläche der Mantelrohre von Spannseilen von Brücken, stellt die für den Betrieb der Bauwerke verantwortlichen Unternehmen bzw. Behörden vor erhebliche Probleme. So kann es beispielsweise vorkommen, dass Spannseilbrücken für den Verkehr geschlossen werden müssen, um zu verhindern, dass durch herabfallende Eisbrocken, die sich von den Spannseilen gelöst haben, über die Brücke fahrende Fahrzeuge beschädigt oder gar deren Insassen verletzt werden.

Um das Eis von den Spannseilen zu entfernen, wurden in der Vergangenheit verschiedene Vorgehensweisen angewendet:
Beispielsweise wurden Arbeiter in Hubkörben von Kranen längs der Spannseile bewegt, sodass diese das Eis von den Spannseilen abschlagen konnten. Auch wurde versucht, die Spannseile durch dicht neben der Brücke fliegende Helikopter derart in Schwingung zu versetzen, dass das Eis von den Spannseilen abplatzte. Diese beiden Lösungsansätze waren äußerst zeitaufwendig, mühsam und ineffektiv.

Eine weitere Vorgehensweise bestand darin, um die Spannseile herum gelegte Kettenringe nacheinander von der oberen Verankerungsvorrichtung zur unteren Verankerungsvorrichtung längs des Spannseiles gleiten zu lassen. Nachteilig an dieser Lösung ist jedoch, dass die Kettenringe an der unteren Verankerungsvorrichtung von dem Spannseil abgenommen und wieder zur oberen Verankerungsvorrichtung transportiert werden müssen. Darüber hinaus sind Beschädigungen an den an der Außenseite des Mantelrohrs angeordneten Regenabweisungsrippen unvermeidbar.

Darüber hinaus ist es bekannt, mittels elektromagnetischer Spulen Pulse zu erzeugen, die sich längs des Mantelrohrs ausbreiten und das Eis mechanisch vom Mantelrohr abplatzen lassen sollten. Dieser Lösungsansatz ist jedoch wegen seines hohen Stromverbrauchs nachteilig.

Schließlich wurden auch noch thermische Lösungsansätze untersucht, bei denen die Eisschicht entweder durch Durchblasen des Mantelrohrs mit Warmluft (s. z.B. KR 10 170 468 B1) oder durch ohmsches Erwärmen einer das Mantelrohr umgebenden Stahlfolie zumindest teilweise zum Schmelzen gebracht werden sollte, um deren Abplatzen vom Mantelrohr zu erleichtern. Auch bei diesen Lösungsansätzen ist der damit einhergehende hohe Stromverbrauch nachteilig.

Aus dem Dokument 6,518,497 B1 ist ein Verfahren und eine Vorrichtung zum Enteisen eines Kabels bekannt, wobei das Kabel an seinem äußeren Umfang gegriffen wird und dann beispielsweise mehrere 100 Male rotiert wird, um elastische Energie in das Kabel einzubringen. Anschließend wird das Kabel freigegeben, sodass es aufgrund der elastischen Energie in seine Ausgangslage zurückrotiert, wodurch Eis vom Kabel gelöst wird.

Es ist Aufgabe der vorliegenden Erfindung, eine in Herstellung und Betrieb kostengünstige Alternative bereitzustellen.

Diese Aufgabe wird erfindungsgemäß durch ein Bauwerk gemäß Anspruch 1 gelöst.

Die Ausführungsvariante, bei welcher eine Bewegung des Mantelrohrs in Umfangsrichtung um dessen Längserstreckungsrichtung zum Einsatz kommt, kann beispielsweise dadurch realisiert werden, dass an einer der Einheiten, Verankerungsvorrichtung oder Mantelrohr, oder einem mit dieser betriebsfest verbundenen Element, eine Drehantriebsvorrichtung angeordnet ist, deren Abtriebswelle ein Kraftübertragungselement trägt, welches mit einem Gegenkraftübertragungselement zusammenwirkt, welches in Umfangsrichtung des Mantelrohrs verläuft und an der jeweils anderen Einheit, Mantelrohr oder Verankerungsvorrichtung, oder einem mit dieser betriebsfest verbundenen Element angeordnet ist.

Die Drehantriebsvorrichtung kann beispielsweise von einem Elektromotor, aber auch von einem hydraulisch oder/und pneumatisch betriebenen Motor gebildet sein.

Ferner kann das Kraftübertragungselement beispielsweise ein Ritzel umfassen, welches mit einer Ringverzahnung kämmt.

Vorteilhafterweise kann sich das Gegenkraftübertragungselement, beispielsweise die Ringverzahnung, dabei über volle 360° erstrecken, um eine kontinuierliche Drehung des Mantelrohrs in einer Drehrichtung zu ermöglichen. Eine derartige kontinuierliche Drehung ist nicht nur vorteilhaft, um das schwerkraftbedingte Abplatzen von Eiswulsten und Eiszapfen und/oder das schwerkraftbedingte Abfallen von Schnee und/oder Wasser, bevor dieser und/oder dieses an dem Mantelrohr anfriert, zu erleichtern, sondern kann auch dazu genutzt werden, eine geringfügig verbleibende Eisschicht gleichmäßig wachsen zu lassen. Dies ist vor allem deshalb vorteilhaft, weil gleichmäßig dicke Eisschichten gegenüber dem sogenannten "Ice Galloping"-

Effekt weniger anfällig sind, sodass die diesem Effekt vorbeugenden Dämpfungselemente kleiner und somit in der Anschaffung kostengünstiger ausgelegt sein können.

Grundsätzlich ist es jedoch auch denkbar, mittels der Drehantriebsvorrichtung eine die Drehrichtung alternierend wechselnde Drehbewegung des Mantelrohrs zu erzeugen, beispielsweise eine Drehoszillation. In diesem Fall kann sich das Gegenkraftübertragungselement, beispielsweise die Ringverzahnung, auch über weniger als 360° erstrecken.

Zur Ermöglichung der Drehung kann ferner vorgesehen sein, dass die Verankerungsvorrichtung oder das mit dieser betriebsfest verbundene Element einerseits und das Mantelrohr oder das mit diesem betriebsfest verbundene Element andererseits über ein Drehlager miteinander zusammenwirken. Durch den Einsatz eines derartigen Drehlagers können die Reibungskräfte zwischen den relativ zueinander bewegten Einheiten minimiert werden, so dass die die Drehung herbeiführende Drehantriebsvorrichtung leistungsschwächer ausgeführt und damit kostengünstiger erhältlich sein kann.

Um die Drehantriebsvorrichtung, das Kraftübertragungselement und das Gegenkraftübertragungselement vor dem Einfluss der Witterung schützen zu können, wird ferner vorgeschlagen, dass die Drehantriebsvorrichtung, das Kraftübertragungselement und das Gegenkraftübertragungselement innerhalb eines Abschlussrohrs der Verankerungsvorrichtung oder eines mit diesem betriebsfest verbundenen weiteren Rohrelements angeordnet sind.

Grundsätzlich ist es jedoch auch denkbar, die Drehantriebsvorrichtung, das Kraftübertragungselement und das Gegenkraftübertragungselement außerhalb des Abschlussrohrs der Verankerungsvorrichtung oder des mit diesem betriebsfest verbundenen weiteren Rohrelements anzuordnen. In dieser Ausgestaltungsvariante kann die erfindungsgemäße Vorrichtung in einfacher Weise an bereits bestehenden Spanngliedern nachgerüstet werden.

Nicht erfindungsgemäße Ausführungsvarianten, bei welcher eine Bewegung des Mantelrohrs in axialer oder/und radialer Richtung bezüglich dessen Längserstreckungsrichtung zum Einsatz kommt, können beispielsweise dadurch realisiert werden, dass an einer der Einheiten, Verankerungsvorrichtung oder Mantelrohr, oder einem mit dieser betriebsfest verbundenen Element, eine Drehantriebsvorrichtung angeordnet ist, deren Abtriebswelle wenigstens ein axial oder/und radial wirkendes Nockenelement trägt, welches mit einer Gegennockenfläche zusammenwirkt, welche an der jeweils anderen Einheit, Mantelrohr oder Verankerungsvorrichtung, oder einem mit dieser betriebsfest verbundenen Element angeordnet ist. Durch das Zusammenwirken des Nockenelements mit der Gegennockenfläche wird das Mantelrohr in axialer oder/und radialer Richtung aus einer Ausgangsstellung ausgelenkt und kehrt nach Außer-Eingriff-Treten des Nockenelements mit der Gegennockenfläche schwerkraftbedingt oder/und unter dem Einfluss einer, beispielsweise von einer Vorspannfeder erzeugten, Vorspannkraft selbsttätig in die Ausgangsstellung zurück. Das abrupte Abbremsen des Mantelrohrs in der Ausgangsstellung erzeugt in diesem eine Erschütterung, die sich längs des Mantelrohrs ausbreitet und das Abplatzen von Eis von der Außenoberfläche des Mantelrohrs erleichtert.

Durch geeignete Wahl der Drehzahl der Drehantriebsvorrichtung sowie der Anzahl der Nockenelemente können in dem Mantelrohr ferner Vibrationen erzeugt werden, um das Abplatzen von Eis von der Außenoberfläche des Mantelrohrs zu erleichtern.

Auch bei dieser Ausführungsvariante kann die Drehantriebsvorrichtung beispielsweise von einem Elektromotor, aber auch von einem hydraulisch oder/und pneumatisch betriebenen Motor gebildet sein.

Ferner ist es auch bei dieser Ausführungsvariante zum Schutz der erfindungsgemäßen Vorrichtung vor Witterungseinflüssen vorteilhaft, wenn die Drehantriebsvorrichtung, das Nockenelement und die Gegennockenfläche innerhalb eines Abschlussrohrs der Verankerungsvorrichtung oder eines mit diesem betriebsfest verbundenen weiteren Rohrelements angeordnet sind.

Zur Ermöglichung einer Nachrüstung der erfindungsgemäßen Vorrichtung an bereits bestehenden Spanngliedern ist es jedoch auch denkbar, dass die Drehantriebsvorrichtung, das Nockenelement und die Gegennockenfläche außerhalb des Abschlussrohrs der Verankerungsvorrichtung oder des mit diesem betriebsfest verbundenen weiteren Rohrelements angeordnet sind. In diesem Fall kann die Gegennockenfläche in einfacher Weise von der Außenoberfläche des Mantelrohrs gebildet sein.

Alternativ können die nicht erfindungsgemäßen Ausführungsvarianten, bei welcher eine Bewegung des Mantelrohrs in axialer oder/und radialer Richtung bezüglich dessen Längserstreckungsrichtung zum Einsatz kommt, jedoch auch dadurch realisiert werden, dass an einer der Einheiten, Verankerungsvorrichtung oder Mantelrohr, oder einem mit dieser verbundenen Element, eine axial oder/und radial wirkende Linearantriebsvorrichtung angeordnet ist, deren Stellelement auf die jeweils andere Einheit, Mantelrohr oder Verankerungsvorrichtung, oder ein mit dieser verbundenes Element einwirkt. Bei Betätigung der Linearantriebsvorrichtung kann deren Stellelement das Mantelrohr entgegen dessen Schwerkraft aus einer Ausgangsstellung auslenken. Anschließend kann die Linearantriebsvorrichtung kraftlos geschaltet werden, sodass das Mantelrohr schwerkraftbedingt oder/und unter dem Einfluss einer, beispielsweise von einer Vorspannfeder erzeugten, Vorspannkraft in seine Ausgangsstellung zurückkehren kann. Das abrupte Abbremsen des Mantelrohrs in der Ausgangsstellung erzeugt in diesem eine Erschütterung, die sich längs des Mantelrohrs ausbreitet und das Abplatzen von Eis von der Außenoberfläche des Mantelrohrs erleichtert. Vorteilhafterweise ist die Linearantriebsvorrichtung derart ausgebildet, dass die Bewegung zurück in die Ausgangsstellung im Wesentlichen reibungsfrei erfolgt.

Die Linearantriebsvorrichtung kann beispielsweise von einem hydraulisch und/oder pneumatisch betriebenen Zylinder-Kolben-Aggregat gebildet sein, dem eine Steuerungsvorrichtung zugeordnet ist, welche dazu ausgelegt und bestimmt ist, das Zylinder-Kolben-Aggregat bei Erreichen einer vorbestimmten Verlängerungsstellung drucklos zu schalten, und eine den Zylinder des Zylinder-Kolben-Aggregats überbrückende, im wesentlichen strömungswiderstandsfreie Bypass-Leitung zu öffnen.

In Weiterbildung der Erfindung wird vorgeschlagen, dass sie ferner eine Steuervorrichtung umfasst, welche zum einen mit wenigstens einem Witterungserfassungssensor oder/und wenigstens einem Vereisungszustandserfassungssensor verbunden und zum anderen mit dem Kraftgerät, nämlich der Drehantriebsvorrichtung oder/und der Linearantriebsvorrichtung, verbunden ist. Der wenigstens eine Witterungserfassungssensor kann dabei beispielsweise wenigstens einen Temperatursensor oder/und wenigstens einen Windgeschwindigkeitssensor oder/und wenigstens einen Niederschlagsmengensensor umfassen. Darüber hinaus kann der wenigstens eine Vereisungszustandserfassungssensor wenigstens eine Kamera mit zugeordneter Bildauswertungseinheit umfassen. Die Erfassungssignale des wenigstens einen Sensors können von der Steuervorrichtung ausgewertet und zur Ermittlung eines an das Kraftgerät auszugebenden Aktivierungs- und/oder Deaktivierungssignals verwendet werden.

An dieser Stelle sei nochmals betont, dass die drei vorstehend erläuterten Ausführungsvarianten mit all ihren Weiterbildungen auch in Kombination miteinander verwirklicht werden können. Beispielsweise kann die Drehbewegung, welche zum axialen oder/und radialen Zusammenwirken des Nockenelements mit der Gegennockenfläche erforderlich ist, eine kontinuierliche Drehbewegung des Mantelrohrs in Umfangsrichtung sein.

Nach einem weiteren Gesichtspunkt betrifft die Erfindung ein Spannglied, welches mit einer erfindungsgemäßen Enteisungs- und Vereisungsvorbeugungsvorrichtung versehen ist.

Dabei kann jedem der Enden des Spannglieds eine gesonderte Verankerungsvorrichtung zugeordnet sein, wobei jedes der Enden des Spannglieds eine erfindungsgemäße Enteisungs- und Vereisungsvorbeugungsvorrichtung aufweisen kann, welche mit der zugeordneten Verankerungsvorrichtung zusammenwirkt.

Ferner kann das Mantelrohr von einem Hüllrohr gebildet sein, welches das wenigstens eine Spannelement des Spannglieds, insbesondere zum Zwecke des Korrosionsschutzes, umgibt. Da der Zwischenraum zwischen dem wenigstens einen Spannglied und dem Hüllrohr häufig mit Korrosionsschutzmasse, beispielsweise Fett und/oder Wachs, gefüllt ist, was eine Bewegung des Hüllrohrs relativ zu dem wenigstens einen Spannelement erschwert, kann das Mantelrohr alternativ auch von einem das Hüllrohr umgebenden gesonderten Mantelrohr gebildet sein.

Bezüglich weiterer Weiterbildungsmöglichkeiten und der damit erzielbaren Vorteile sei auf die vorstehende Erläuterung der erfindungsgemäßen Enteisungs- und Vereisungsvorbeugungsvorrichtung verwiesen.

Nach einem noch weiteren Gesichtspunkt betrifft die Erfindung ein Bauwerk mit wenigstens einem derartigen Spannglied. Bezüglich der Weiterbildungsmöglichkeiten und der damit erzielbaren Vorteile sei auf die vorstehende Erläuterung der erfindungsgemäßen Enteisungs- und Vereisungsvorbeugungsvorrichtung verwiesen.

Die Erfindung wird im Folgenden an Ausführungsbeispielen anhand der beigefügten Zeichnung näher erläutert werden. Es stellt dar:
- Figur 1: eine schematische Darstellung eines wenigstens ein Spannglied aufweisenden Bauwerks, wobei eine Verankerungsvorrichtung des Spannglieds eine erfindungsgemäße Enteisungsund Vereisungsvorbeugungsvorrichtung aufweist, und wobei diese Darstellung zur Erläuterung des Grundgedankens der Erfindung dient, der allen spezifischen Ausführungsformen gemein ist;
- Figur 2: eine Detailansicht der Verankerungsvorrichtung des Spannglieds, bei welcher eine Enteisungs- und Vereisungsvorbeugungsvorrichtung gemäß einer ersten Ausführungsform der Erfindung zum Einsatz kommt;
- Figur 3: eine vergrößerte Darstellung des Details III in Figur 2;
- Figur 4: eine längs der Linie IV-IV in Figur 3 genommene Schnittansicht;
- Figur 5: eine Ansicht ähnlich Figur 2, bei welcher eine Enteisungs- und Vereisungsvorbeugungsvorrichtung gemäß einer zweiten Ausführungsform der Erfindung zum Einsatz kommt;
- Figur 6: eine Ansicht ähnlich Figur 2, bei welcher eine Enteisungs- und Vereisungsvorbeugungsvorrichtung gemäß einer dritten Ausführungsform der Erfindung zum Einsatz kommt;
- Figur 7: eine vergrößerte Darstellung des Details VII in Figur 6;
- Figur 8: eine längs der Linie VIII-VIII in Figur 7 genommene Schnittansicht;
- Figur 9: eine Ansicht ähnlich Figur 2, bei welcher eine Enteisungs- und Vereisungsvorbeugungsvorrichtung gemäß einer vierten Ausführungsform der Erfindung zum Einsatz kommt;
- Figur 10: eine vergrößerte Darstellung des Details X in Figur 9; und
- Figur 11: eine längs der Linie XI-XI in Figur 10 genommene Schnittansicht.

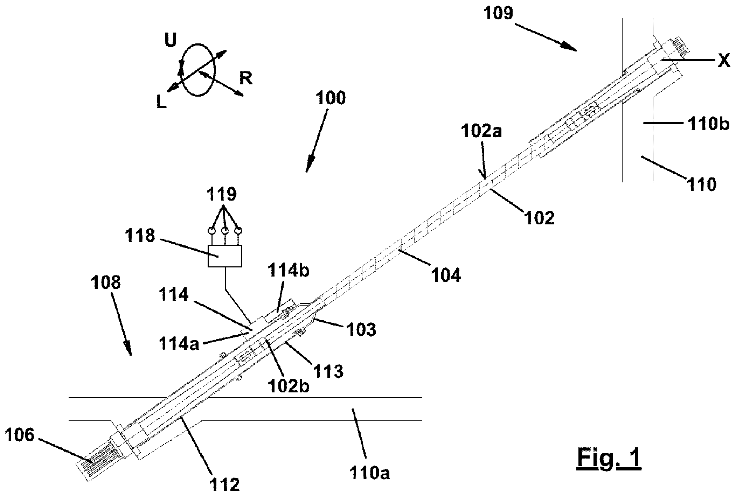

In Figur 1 ist eine erfindungsgemäße Enteisungs- und Vereisungsvorbeugungsvorrichtung, hier allgemein mit 100 bezeichnet, dargestellt. Die Ausführungen bezüglich dieser Figur gelten entsprechend für die nachfolgend beschriebenen Ausführungsformen und dienen dazu, den Grundgedanken der Erfindung zu erläutern.

Die Vorrichtung 100 dient dazu, die Oberfläche 102a eines Witterungseinflüssen ausgesetzten Mantelrohrs 102 zu enteisen bzw. deren Vereisung vorzubeugen, wenn nicht gar diese zu verhindern. Das Mantelrohr 102 ist Teil eines Spannglieds 104, welches in den dargestellten Ausführungsformen eine Mehrzahl von Spannelementen 106 umfasst, die in dem Mantelrohr 102 aufgenommen sind. Grundsätzlich ist es jedoch auch denkbar, dass das Spannglied 104 lediglich ein einziges Spannelement 106 umfasst.

Das Spannglied 104 ist in an sich bekannter Weise mittels zweier Verankerungsvorrichtungen 108, 109 an einem Bauwerk 110 verankert, nämlich einer aktiven Verankerungsvorrichtung 108 und einer passiven Verankerungsvorrichtung 109. Dabei kann das Bauwerk 110 beispielsweise eine extern vorgespannte Brücke sein, es kann jedoch auch jede andere Art von Bauwerk sein, für dessen statischen Aufbau ein oder mehrere Spannglieder 104 verwendet werden können. In dem dargestellten Beispiel handelt es sich bei dem Bauwerk 110 um eine Schrägseilbrücke, welche wenigstens einen Pylonen 110b, sowie ein Fahrbahndeck 110a aufweist, an denen das Spannglied 104 mittels der Verankerungsvorrichtungen 108 und 109 verankert ist.

Da die Spannelemente 106 zum Zwecke der Verankerung üblicherweise vereinzelt und jedes für sich an dem Bauwerk 110 verankert werden, was ein Aufweiten des Spannglieds 104 zur Folge hat, endet das Mantelrohr 102 in einem vorbestimmten Abstand vor derVerankerungsvorrichtung 108. Um die Spannelemente 106 aber gleichwohl vor Witterungseinflüssen schützen zu können, erstreckt sich ein die Spannelemente 106 umgebendes, ein- oder mehrteilig ausgebildetes Abschlussrohr 112 zwischen der Verankerungsvorrichtung 108 und dem Ende 102b des Mantelrohrs 102.

Durch das Mantelrohr 102 wird ein Zylinderkoordinatensystem mit einer Längsrichtung L, einer Radialrichtung R und einer Umfangsrichtung U definiert. Die Längsrichtung L erstreckt sich entlang der Längsachse X des Mantelrohrs 102, die Umfangsrichtung U erstreckt sich in der Umfangsrichtung um die Längsachse X des Mantelrohrs 102, und die Radialrichtung R erstreckt sich bezüglich der Längsachse X des Mantelrohrs 102 in radialer Richtung.

Erfindungsgemäß ist gemäß Figur 1 dem Abschlussrohr 112, genauer gesagt einem mit diesem betriebsfest verbundenen weiteren Rohr 113, und dem Mantelrohr 102 bzw. einem mit diesem betriebsfest verbundenen Glockenteil 103 ein Kraftgerät 114 zugeordnet, dessen Antriebsseite 114a an dem Abschlussrohr 112 bzw. dem weiteren Rohr 113 befestigt ist und dessen Abtriebsseite 114b auf das Mantelrohr 102 bzw. das Glockenteil 103 einwirkt. Durch das Zusammenwirken von Abschlussrohr 112, Mantelrohr 102 und Kraftgerät 114 kann das Mantelrohr 102 relativ zum Abschlussrohr 112 in Umfangsrichtung U oder/und in Längsrichtung L oder/und in Radialrichtung R bewegt werden. Durch diese Bewegung können Eisbrocken bzw. Eiszapfen, die sich einseitig an dem Mantelrohr 102 angesammelt haben, schwerkraftbedingt oder/und trägheitsbedingt zum Abplatzen von der äußeren Oberfläche 102a des Mantelrohrs 102 gebracht werden.

Das Kraftgerät 114 kann ein elektrisch, insbesondere elektromotorisch, oder/und hydraulisch oder/und pneumatisch betriebenes Kraftgerät sein. Beispielsweise kann die Antriebsseite 114a des Kraftgeräts 114 von einem Elektromotor, einem Zylinder-Kolben-Aggregat oder dergleichen gebildet sein.

Darüber hinaus kann die Enteisungs- und Vereisungsvorbeugungsvorrichtung 100 mit einer Steuervorrichtung 118 ausgestattet sein, die Sensoren 119 umfasst und mit dem Kraftgerät 114 verbunden ist.

Die Sensoren 119 können wenigstens einen Witterungserfassungssensor oder/und wenigstens einen Vereisungszustandssensor, in Figur 1 gemeinsam mit 119 bezeichnet, umfassen, wobei der Witterungssensor einen Temperatursensor oder/und einen Windgeschwindigkeitssensor oder/und einen Niederschlagsmengensensor umfassen kann. Zusätzlich kann der Vereisungszustandserfassungssensor eine Kamera mit zugeordneter Bildauswertungseinheit umfassen. Die Erfassungssignale des Sensors bzw. der Sensoren 119 können von der Steuervorrichtung 118 ausgewertet und zur Ermittlung eines an das Kraftgerät 114 auszugebenden Aktivierungs-und/oder Deaktivierungssignals verwendet werden.

Dieses Überwachungssystem dient dazu, die Umgebungsverhältnisse des Spannglieds 104 bzw. des Mantelrohrs 102 des Spannglieds 104 zu detektieren und die Enteisungs- und Vereisungsvorbeugungsvorrichtung 100 mit den daraus gewonnenen Daten zu steuern/regeln. Bei einem entsprechenden Sensorsignal, das eine Gefahr der Vereisung bzw. eine Vereisung angibt, steuert die Enteisungs- und Vereisungsvorbeugungsvorrichtung 100 das Kraftgerät 114 an, um dieses zu veranlassen, das Mantelrohr 102 relativ zum Abschlussrohr 112 zu bewegen.

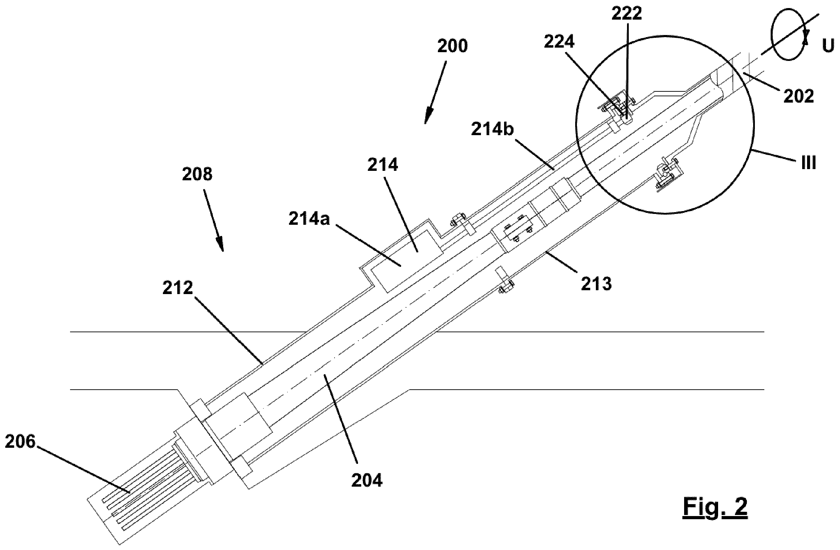

Mit Bezug auf die Figuren 2 bis 4 wird im Folgenden eine spezifische Ausführungsform der vorstehend mit Bezug auf Figur 1 ganz allgemein erläuterten erfindungsgemäßen Enteisungs- und Vereisungsvorbeugungsvorrichtung beschrieben werden. Da die in den Figuren 2 bis 4 dargestellte Ausführungsform im Wesentlichen der Ausführungsform gemäß Figur 1 entspricht, sind in den Figuren 2 bis 4 analoge Teile mit den gleichen Bezugszeichen versehen wie in Figur 1, jedoch vermehrt um die Zahl 100. Darüber hinaus wird die Ausführungsform der Figuren 2 bis 4 im Folgenden nur insofern beschrieben werden, als sie sich von der Ausführungsform gemäß Figur 1 unterscheidet, auf deren Beschreibung hiermit ansonsten ausdrücklich verwiesen sei.

Die in den Figuren 2 bis 4 im Bereich der Verankerungsvorrichtung 208 dargestellte Enteisungs- und Vereisungsvorbeugungsvorrichtung 200 ist dazu ausgelegt, das Mantelrohr 202 relativ zum Abschlussrohr 212 in Umfangsrichtung U zu bewegen.

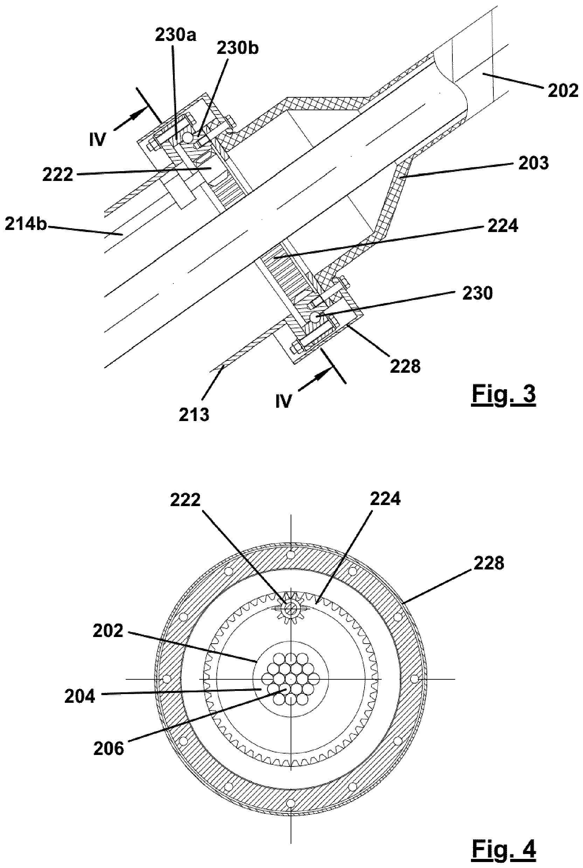

Hierzu kann das Kraftgerät 214 von einer Drehantriebsvorrichtung gebildet sein. Insbesondere kann die Antriebsseite 214a des Kraftgeräts 214 einen Elektromotor umfassen, der innerhalb des Abschlussrohrs 212 angeordnet ist. Am freien Ende einer Abtriebswelle 214b des Kraftgeräts 214 ist ein Ritzel 222 angeordnet, das mit der Innenverzahnung eines Zahnkranzes 224 kämmt, der seinerseits mit dem Glockenteil 203 des Mantelrohrs 202 betriebsfest verbunden ist (siehe auch Figuren 3 und 4).

Um eine Drehbewegung des Mantelrohrs 202 bzw. des mit diesem über das Glockenteil 203 verbundenen Zahnkranzes 224 relativ zum Abschlussrohr 212 sowie eine Führung des Mantelrohrs 202 am Abschlussrohr 212 ermöglichen zu können, ist in der Ausführungsform der Figuren 2 bis 4 zwischen diesen Teilen ein Drehlager 230 vorgesehen, beispielsweise ein Kugellager, dessen äußerer Lagerring 230a mit dem Abschlussrohr 212 bzw. dem mit diesem verbundenen weiteren Rohr 213 betriebsfest verbunden ist und dessen innerer Lagerring 230b den Zahnkranz 224 trägt und mit dem Mantelrohr 202 bzw. dem Glockenteil 203 betriebsfest verbunden ist.

Das Drehlager 230, der Zahnkranz 224 und das Ritzel 222 können zum Schutz vor äußeren Einflüssen, insbesondere Witterungseinflüssen, von einer Schutzkappe 228 überdeckt sein.

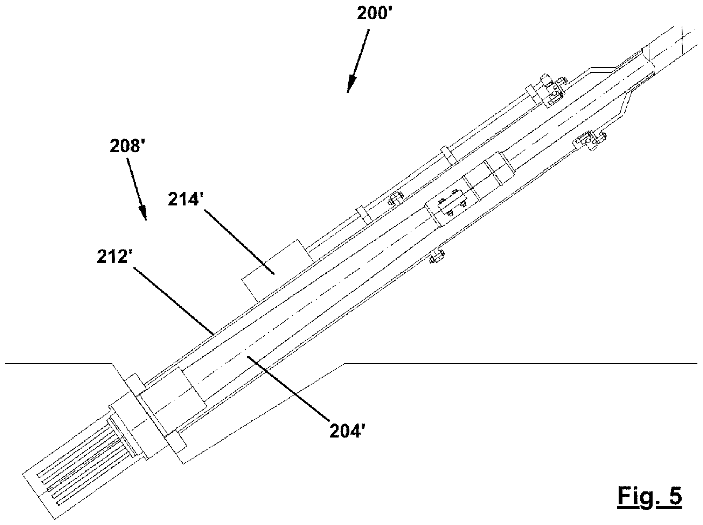

Nachzutragen ist noch, dass die Enteisungs- und Vereisungsvorbeugungsvorrichtung 200, wie in Figur 2 dargestellt, innerhalb des Abschlussrohres 212 untergebracht ist. Dies hat den Vorteil, dass auch der Elektromotor 214a vor äußeren Einflüssen, insbesondere Witterungseinflüssen, geschützt ist, erfordert jedoch ein speziell für die Aufnahme des Elektromotors 214a ausgebildetes Abschlussrohr 212. Wie in Figur 5 dargestellt ist, kann das Kraftgerät 214' aber auch an der Außenfläche des Abschlussrohrs 212' der Verankerungsvorrichtung 208' angeordnet sein, um die Enteisungs- und Vereisungsvorbeugungsvorrichtung 200' in einfacher Weise an bereits bestehenden Spanngliedern 204' nachrüsten zu können.

Nachzutragen ist ferner, dass auch bei der Ausführungsform der Figuren 2 bis 4 das Mantelrohr 202 Teil eines Spannglieds 204 sein kann, welches eine Mehrzahl von Spannelementen 206 umfasst, die in dem Mantelrohr 202 aufgenommen sind. Grundsätzlich ist es jedoch auch denkbar, dass das Spannglied 204 lediglich ein einziges Spannelement 206 umfasst.

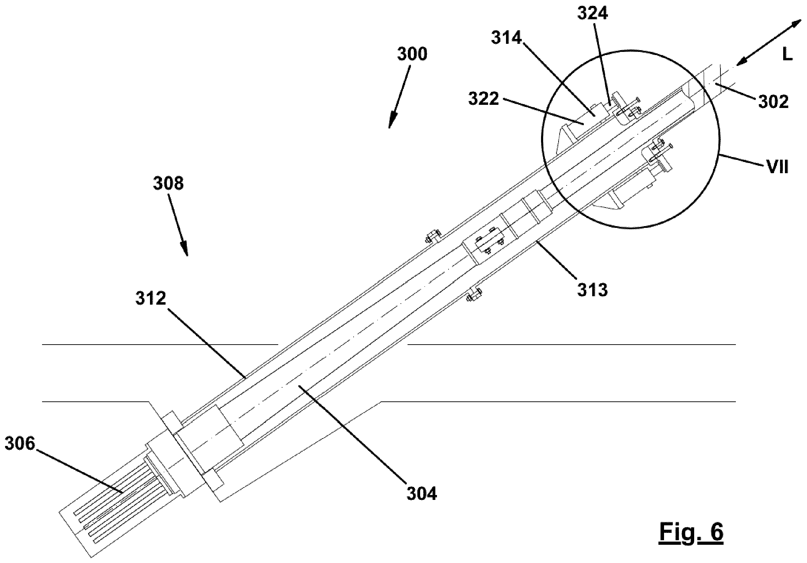

Mit Bezug auf die Figuren 6 bis 8 wird im Folgenden eine weitere spezifische Ausführungsform der vorstehend mit Bezug auf Figur 1 ganz allgemein erläuterten erfindungsgemäßen Enteisungs- und Vereisungsvorbeugungsvorrichtung beschrieben werden. Da die in den Figuren 6 bis 8 dargestellte Ausführungsform im Wesentlichen der Ausführungsform gemäß Figur 1 entspricht, sind in den Figuren 6 bis 8 analoge Teile mit den gleichen Bezugszeichen versehen wie in Figur 1, jedoch vermehrt um die Zahl 200. Darüber hinaus wird die Ausführungsform der Figuren 6 bis 8 im Folgenden nur insofern beschrieben werden, als sich von der allgemeinen Ausführungsform gemäß Figur 1 bzw. der speziellen Ausführungsform gemäß Figuren 2 bis 4 unterscheidet, auf deren Beschreibung hiermit ansonsten ausdrücklich verwiesen sei.

Die in den Figuren 6 bis 8 im Bereich der Verankerungsvorrichtung 308 dargestellte Enteisungs- und Vereisungsvorbeugungsvorrichtung 300 ist dazu ausgelegt, das Mantelrohr 302 relativ zum Abschlussrohr 312 in Längsrichtung L zu bewegen.

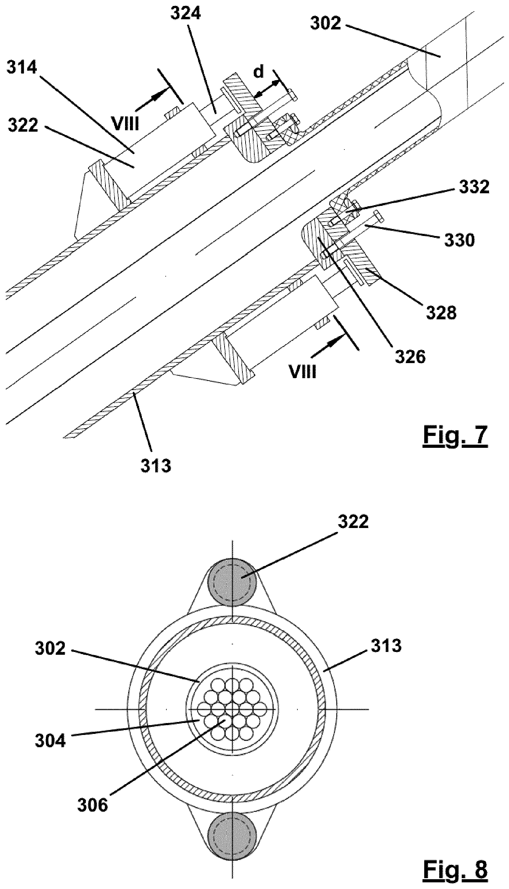

Das Kraftgerät 314 der hier beschriebenen weiteren Ausführungsform der Enteisungs- und Vereisungsvorbeugungsvorrichtung 300 kann von einer Linearantriebsvorrichtung gebildet sein. Die Linearantriebsvorrichtung ist in dieser Ausführungsform axial wirkend ausgebildet, wie es insbesondere aus der Figur 6 und 7 ersichtlich ist.

In dem dargestellten Ausführungsbeispiel ist das Kraftgerät 314 von einem Zylinder-Kolben-Aggregat gebildet, welches hydraulisch und/oder pneumatisch betrieben werden kann. Insbesondere bildet der mit dem Abschlussrohr 312 bzw. mit dem weiteren Rohr 313 betriebsfest verbundene Zylinder 322 des Zylinder-Kolben-Aggregats 314 die Antriebsseite 314a, während die Abtriebsseite 314b durch eine mit dem Kolben des Zylinder-Kolben-Aggregats 314 verbundene Kolbenstange 324 gebildet ist.

Ein freies Ende der Kolbenstange 324 wirkt auf eine Anschlagplatte 328 ein, welche mittels Schraubbolzen 332 mit dem Mantelrohr 302 betriebsfest verbunden ist. Die Anschlagplatte 328 und damit das Mantelrohr 302 ist mittels die Anschlagplatte 328 durchsetzenden Führungsbolzen 330, welche mit einer Endplatte 326 des Abschlussrohrs 312 bzw. des weiteren Rohrs 313 betriebsfest verbunden sind, relativ zum Abschlussrohr 312 bzw. zum weiteren Rohr 313 in Längsrichtung L verstellbar geführt. Dabei begrenzen die freien Enden der Führungsbolzen 330 den verfügbaren Hub auf eine Länge d.

Es versteht sich, dass anstelle der Bolzen 330 und 332 auch jedes andere geeignete Verbindungs- bzw. Führungsmittel eingesetzt werden kann.

Um das Mantelrohr 302 ausgehend von der in Figur 7 dargestellten verkürzten Ausgangsstellung relativ zum Abschlussrohr 312 bzw. zum weiteren Rohr 313 in Längsrichtung L zu verstellen, braucht lediglich das Zylinder-Kolben-Aggregat 314 im Sinne des Ausfahrens der Kolbenstange 314b aus dem Zylinder 314 mit Betriebsfluid beaufschlagt zu werden. Hat die Anschlagplatte 328 nach Durchlaufen des Hubwegs das freie Ende der Führungsbolzen 330 erreicht, so kann das Zylinder-Kolben-Aggregat 314 wieder kraftlos geschaltet werden, so dass das Mantelrohr 302 schwerkraftbedingt und idealerweise nahezu reibungsfrei in die in Figur 7 dargestellte Ausgangsstellung zurückkehrt.

Durch das abrupte Abbremsen des Mantelrohrs 302 in der Ausgangsstellung wird in diesem eine Erschütterung erzeugt, die sich längs des Mantelrohrs 302 ausbreitet und das Abplatzen von Eis von der Außenoberfläche des Mantelrohrs 302 erleichtert.

Nachzutragen ist noch, dass auch bei der Ausführungsform der Figuren 6 bis 8 das Mantelrohr 302 Teil eines Spannglieds 304 sein kann, welches eine Mehrzahl von Spannelementen 306 umfasst, die in dem Mantelrohr 302 aufgenommen sind. Grundsätzlich ist es jedoch auch denkbar, dass das Spannglied 304 lediglich ein einziges Spannelement 306 umfasst.

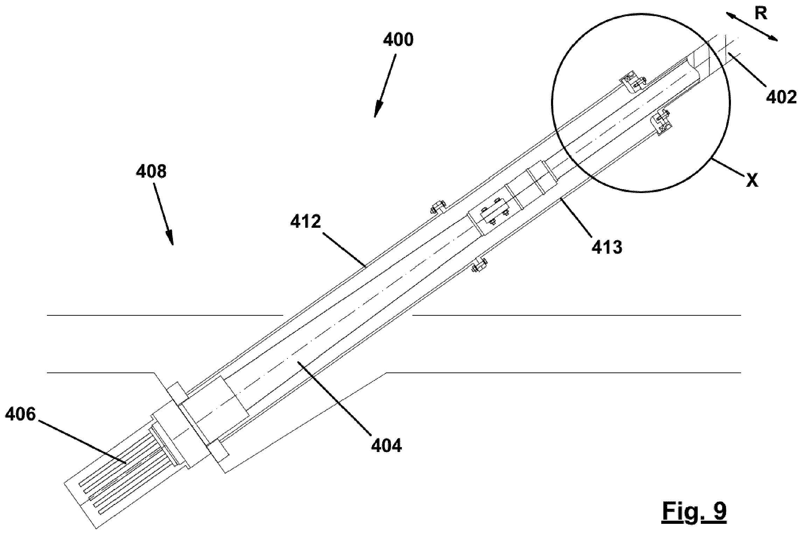

Mit Bezug auf die Figuren 9 bis 11 wird im Folgenden eine weitere spezifische Ausführungsform der vorstehend mit Bezug auf Figur 1 ganz allgemein erläuterten erfindungsgemäßen Enteisungs- und Vereisungsvorbeugungsvorrichtung beschrieben werden. Da die in den Figuren 9 bis 11 dargestellte Ausführungsform im Wesentlichen der Ausführungsform gemäß Figur 1 entspricht, sind in den Figuren 9 bis 11 analoge Teile mit den gleichen Bezugszeichen versehen wie in Figur 1, jedoch vermehrt um die Zahl 300. Darüber hinaus wird die Ausführungsform der Figuren 9 bis 11 im Folgenden nur insofern beschrieben werden, als sich von der allgemeinen Ausführungsform gemäß Figur 1 bzw. den speziellen Ausführungsformen gemäß Figuren 2 bis 4 bzw. 6 bis 8 unterscheidet, auf deren Beschreibung hiermit ansonsten ausdrücklich verwiesen sei.

Die in den Figuren 9 bis 11 im Bereich der Verankerungsvorrichtung 408 dargestellte Enteisungs- und Vereisungsvorbeugungsvorrichtung 400 ist dazu ausgelegt, das Mantelrohr 402 relativ zum Abschlussrohr 412 bzw. zum weiteren Rohr 413 in der Radialrichtung R zu bewegen.

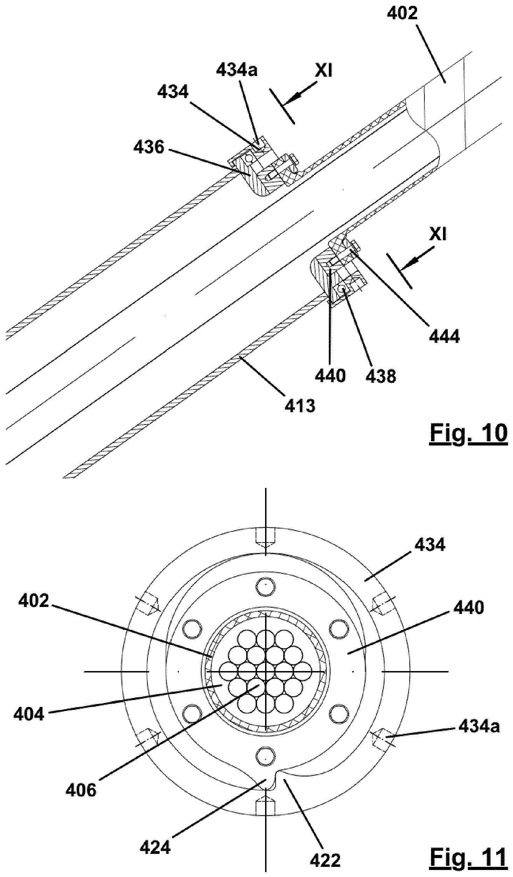

Zur Realisierung dieser Bewegung ist das (nicht dargestellte) Kraftgerät von einer Drehantriebsvorrichtung gebildet, die eine Nockenscheibe 434 mit wenigstens einem Nockenelement 422 drehantreibt. Die Nockenscheibe 434 ist über ein Drehlager 438 an einer Lagerplatte 436 drehbar gelagert, welche mit dem weiteren Rohr 413 betriebsfest verbunden ist. In den Figuren 10 und 11 erkennt man Gewindebohrungen 434a zur Befestigung eines (nicht dargestellten) Zahnkranzes, auf welchen die Drehantriebsvorrichtung zum Drehantreiben der Nockenscheibe 434 einwirken kann. Grundsätzlich könnte die Drehung aber auch durch in die Bohrungen 434a eingesteckte Stangen erfolgen. Ferner ist eine Gegennockenscheibe 440, die wenigstens ein Gegennockenelement 424 trägt, über Schraubbolzen 444 mit dem Mantelrohr 402 verbunden.

Treibt das Kraftgerät die Nockenscheibe 434 zu einer Drehbewegung an, wodurch auch das Nockenelement 422 gedreht wird, und zwar in Ansicht der Figur 11 entgegen dem Uhrzeigersinn, so tritt das Nockenelement 422 mit dem Gegennockenelement 424 in Eingriff. Hierdurch wird die Gegennockenscheibe 440 und damit das Mantelrohr 402 in Figur 11 nach oben ausgelenkt wird. Hat sich das Nockenelement 422 an dem Gegennockenelement 424 vorüber bewegt, kehrt das Mantelrohr 402 in Radialrichtung R abrupt in die in Figur 11 dargestellte Stellung zurück. Hierdurch wird in dem Mantelrohr 402 eine Erschütterung erzeugt, die sich längs des Mantelrohrs 402 ausbreitet und das Abplatzen von Eis von der Außenoberfläche des Mantelrohrs 402 erleichtert.

Nachzutragen ist noch, dass auch bei der Ausführungsform der Figuren 9 bis 11 das Mantelrohr 402 Teil eines Spannglieds 404 sein kann, welches eine Mehrzahl von Spannelementen 406 umfasst, die in dem Mantelrohr 402 aufgenommen sind. Grundsätzlich ist es jedoch auch denkbar, dass das Spannglied 404 lediglich ein einziges Spannelement 406 umfasst.

## Patentansprüche

1. Bauwerk (110) mit einem ein Mantelrohr (102) aufweisenden Spannglied (104), wobei das Spannglied (104) mittels einer Verankerungsvorrichtung (108) am Bauwerk (110) verankert ist, und **dadurch gekennzeichnet, dass** das Bauwerk eine Vorrichtung (100) aufweist, welche dazu ausgelegt und bestimmt ist, die Oberfläche (102a) eines Witterungseinflüssen ausgesetzten Mantelrohrs (102) eines Spannglieds (104) zu enteisen oder/und dessen Vereisen vorzubeugen, wenn nicht gar zu verhindern, wobei die Vorrichtung (100) ein Kraftgerät (114) umfasst, welches einenends mit der Verankerungsvorrichtung (108) oder einem mit dieser betriebsfest verbundenen Teil (112, 113) in Kraftübertragungseingriff steht und andernends mit dem Mantelrohr (102) oder einem mit diesem betriebsfest verbundenen Teil (103) in Kraftübertragungseingriff steht, und dazu ausgelegt und bestimmt ist, das Mantelrohr (102) relativ zur Verankerungsvorrichtung (108) bezüglich der Längserstreckungsrichtung (X) des Mantelrohrs (102) in Umfangsrichtung (U) zu bewegen.

2. Bauwerk (110) nach Anspruch 1,
**dadurch gekennzeichnet, dass** an einer der Einheiten, Verankerungsvorrichtung (208) oder Mantelrohr, oder einem mit dieser verbundenen Element (212, 213), eine Drehantriebsvorrichtung (214) angeordnet ist, deren Abtriebswelle (214b) ein Kraftübertragungselement (222) trägt, welches mit einem Gegenkraftübertragungselement (224) zusammenwirkt, welches in Umfangsrichtung (U) des Mantelrohrs (202) verläuft und an der jeweils anderen Einheit, Mantelrohr (202) oder Verankerungsvorrichtung, oder einem mit dieser verbundenen Element (203) angeordnet ist.

3. Bauwerk (110) nach Anspruch 2,
**dadurch gekennzeichnet, dass** sich das Gegenkraftübertragungselement (224) über volle 360° erstreckt.

4. Bauwerk (110) nach Anspruch 2 oder 3,
**dadurch gekennzeichnet, dass** die Verankerungsvorrichtung (208) oder das mit dieser betriebsfest verbundene Element (212, 213) einerseits und das Mantelrohr (202) oder das mit diesem betriebsfest verbundene Element (203) andererseits über ein Drehlager (230) miteinander zusammenwirken.

5. Bauwerk (110) nach einem der Ansprüche 2 bis 4,
**dadurch gekennzeichnet, dass** die Antriebsvorrichtung (214) und die mit dieser zusammenwirkenden Teile innerhalb eines Abschlussrohrs (212) der Verankerungsvorrichtung oder eines mit diesem betriebsfest verbundenen weiteren Rohrelements (213) angeordnet sind.

6. Bauwerk (110) nach einem der Ansprüche 2 bis 4,
**dadurch gekennzeichnet, dass** die Antriebsvorrichtung (214') und die mit dieser zusammenwirkenden Teile außerhalb eines Abschlussrohrs (212') der Verankerungsvorrichtung (208') oder eines mit diesem betriebsfest verbundenen weiteren Rohrelements angeordnet sind.

7. Bauwerk (110) nach einem der Ansprüche 1 bis 6,
**dadurch gekennzeichnet, dass** sie ferner eine Steuervorrichtung (118) umfasst, welche zum einen mit wenigstens einem Witterungserfassungssensor oder/und wenigstens einem Vereisungszustandserfassungssensor (gemeinsam: 119) verbunden und zum anderen mit dem Kraftgerät (114) verbunden ist.

8. Bauwerk (110) nach einem der Ansprüche 1 bis 7,
**dadurch gekennzeichnet, dass** jedem Ende des Spannglieds (104) eine gesonderte Verankerungsvorrichtung (108, 109) zugeordnet ist, und
dass jedes der Enden des Spannglieds (104) eine Vorrichtung (100) aufweist, welche mit der zugeordneten Verankerungsvorrichtung (108, 109) zusammenwirkt.

9. Bauwerk (110) nach einem der Ansprüche 1 bis 8,
**dadurch gekennzeichnet, dass** das Mantelrohr von einem Hüllrohr (202) gebildet ist, welches das wenigstens eine Spannelement (206) des Spannglieds (204), insbesondere zum Zwecke des Korrosionsschutzes, umgibt oder von einem das Hüllrohr (202') umgebenden gesonderten Mantelrohr (205').

## Claims

1. Structure (110) comprising a tendon (104) that has a casing tube (102), the tendon (104) being anchored to the structure (110) by means of an anchoring device (108), **characterised in that** the structure has a device (100) which is designed and intended for de-icing the surface (102a) of a casing tube (102) of a tendon (104), which tube is subject to the effects of weather, and/or for guarding against, if not preventing, said tube from icing over, the device (100) comprising a force apparatus (114) which at one end is in force-transmitting engagement with the anchoring device (108) or with a part (112, 113) that is connected to said device in an operationally stable manner, and at the other end is in force-transmitting engagement with the casing tube (102) or with a part (103) that is connected to said tube in an operationally stable manner, which apparatus is also designed and intended for moving the casing tube (102) relative to the anchoring device (108) in the circumferential direction (U) with respect to the longitudinal extension direction (X) of the casing tube (102).

2. Structure (110) according to claim 1, **characterised in that** a rotary drive device (214) is arranged on one of the units, i.e. the anchoring device (208) or the casing tube, or on an element (212, 213) connected to the anchoring device or casing tube, the output shaft (214b) of which rotary drive device supports a force transmission element (222) which interacts with a counterforce transmission element (224) that extends in the circumferential direction (U) of the casing tube (202) and is arranged on the other unit, i.e. the casing tube (202) or the anchoring device, or on an element (203) connected to the casing tube or anchoring device.

3. Structure (110) according to claim 2, **characterised in that** the counterforce transmission element (224) extends over a full 360°.

4. Structure (110) according to either claim 2 or claim 3, **characterised in that** the anchoring device (208), or the element (212, 213) connected thereto in an operationally stable manner, and the casing tube (202), or the element (203) connected thereto in an operationally stable manner, interact with each other via a pivot bearing (230).

5. Structure (110) according to any of claims 2 to 4, **characterised in that** the drive device (214) and the parts interacting therewith are arranged inside an end tube (212) of the anchoring device or inside an additional tube element (213) which is connected to the anchoring device in an operationally stable manner.

6. Structure (110) according to any of claims 2 to 4, **characterised in that** the drive device (214') and the parts interacting therewith are arranged outside an end tube (212') of the anchoring device (208') or outside an additional tube element which is connected to the anchoring device in an operationally stable manner.

7. Structure (110) according to any of claims 1 to 6, **characterised in that** it further comprises a control device (118) which is connected both to at least one weather detection sensor and/or at least one ice-formation detection sensor (collectively: 119) and to the force apparatus (114).

8. Structure (110) according to any of claims 1 to 7, **characterised in that** a separate anchoring device (108, 109) is assigned to each end of the tendon (104), and **in that** each end of the tendon (104) has a device (100) which interacts with the assigned anchoring device (108, 109).

9. Structure (110) according to any of claims 1 to 8, **characterised in that** the casing tube is formed by a tendon duct (202) which surrounds the at least one tension element (206) of the tendon (204), in particular for the purpose of corrosion protection, or by a separate casing tube (205') that surrounds the tendon duct (202').

## Revendications

1. Ouvrage de construction (110) avec un organe de tension (104) présentant une chemise tubulaire (102), dans lequel l'organe de tension (104) est ancré au niveau de l'ouvrage de construction (110) au moyen d'un dispositif d'ancrage (108), et **caractérisé en ce que** l'ouvrage de construction présente un dispositif (100), lequel est configuré pour et se destine à dégivrer la surface (102a) d'une chemise tubulaire (102), exposée aux intempéries, d'un organe de tension (104) et/ou à prévenir, voire empêcher, son givrage,
dans lequel le dispositif (100) comprend un appareil de production de force (114), lequel est en prise par transmission de force du côté d'une extrémité avec le dispositif d'ancrage (108) ou une partie (112, 113) reliée à celui-ci de manière solidaire en fonctionnement et est en prise par transmission de force du côté de l'autre extrémité avec la chemise tubulaire (102) ou une partie (103) reliée à celle-ci de manière solidaire en fonctionnement et est configuré pour et se destine à déplacer la chemise tubulaire (102) par rapport au dispositif d'ancrage (108) par rapport à la direction d'extension longitudinale (X) de la chemise tubulaire (102) dans la direction périphérique (U).

2. Ouvrage de construction (110) selon la revendication 1,
**caractérisé en ce qu'**est disposé au niveau d'une des unités, d'un dispositif d'ancrage (208) ou d'une chemise tubulaire, ou d'un élément (212, 213) relié à celle-ci, un dispositif d'entraînement en rotation (214), dont l'arbre de sortie (214b) supporte un élément de transmission de force (222), lequel coopère avec un contre-élément de transmission de force (224), lequel s'étend dans la direction périphérique (U) de la chemise tubulaire (202) et est disposé au niveau de l'autre unité respectivement, la chemise tubulaire (202) ou le dispositif d'ancrage, ou d'un élément (203) relié à celle-ci.

3. Ouvrage de construction (110) selon la revendication 2,
**caractérisé en ce que** le contre-élément de transmission de force (224) s'étend sur la totalité des 360°.

4. Ouvrage de construction (110) selon la revendication 2 ou 3,
**caractérisé en ce que** le dispositif d'ancrage (208) ou l'élément (212, 213) relié de manière solidaire en fonctionnement à celui-ci d'une part et la chemise tubulaire (202) ou l'élément (203) relié de manière solidaire en fonctionnement à celle-ci d'autre part coopèrent l'un avec l'autre par l'intermédiaire d'un palier rotatif (230).

5. Ouvrage de construction (110) selon l'une quelconque des revendications 2 à 4,
**caractérisé en ce que** le dispositif d'entraînement (214) et les parties coopérant avec celui-ci sont disposés à l'intérieur d'un tube de terminaison (212) du dispositif d'ancrage ou d'un autre élément tubulaire (213) relié à celui-ci de manière solidaire en fonctionnement.

6. Ouvrage de construction (110) selon l'une quelconque des revendications 2 à 4,
**caractérisé en ce que** le dispositif d'entraînement (214') et les parties coopérant avec celui-ci sont disposés à l'extérieur d'un tube de terminaison (212') du dispositif d'ancrage (208') ou d'un autre élément tubulaire relié à celui-ci de manière solidaire en fonctionnement.

7. Ouvrage de construction (110) selon l'une quelconque des revendications 1 à 6,
**caractérisé en ce qu'**il comprend en outre un dispositif de commande (118), lequel est relié d'une part à au moins un capteur de détection d'intempéries et/ou à au moins un capteur de détection d'état de givrage (commun : 119) et d'autre part est relié à l'appareil de production de force (114).

8. Ouvrage de construction (110) selon l'une quelconque des revendications 1 à 7,
**caractérisé en ce qu'**un dispositif d'ancrage (108, 109) séparé est associé à l'extrémité de l'organe de tension (104), et
**que** chacune des extrémités de l'organe de tension (104) présente un dispositif (100), lequel coopère avec le dispositif d'ancrage (108, 109) associé.

9. Ouvrage de construction (110) selon l'une quelconque des revendications 1 à 8,
**caractérisé en ce que** la chemise tubulaire est formée par une gaine (202), laquelle entoure l'au moins un élément de tension (206) de l'organe de tension (204), en particulier aux fins de la protection contre la corrosion, ou par une chemise tubulaire (205') séparée entourant la gaine (202').
